# FASCICULE DE BREVET EUROPEEN

(11) **EP 2 790 080 B1**
(45) Date de publication et mention de la délivrance du brevet: **14.12.2016**
(21) Numéro de dépôt: 14164295.9
(22) Date de dépôt: 10.04.2014
(51) Int. Cl.: G05D 11/13, B05C 17/01, B05C 11/00, B05C 11/10

(54) **Dispositif et procédé de dépose contrôlée de cordons de fluides visqueux**
Vorrichtung und Verfahren zum kontrollierten Entfernen von Rändern aus dickflüssigen Fluiden
Device and method for controlled removal of beads of viscous fluids

(30) Priorité: 11.04.2013 FR 1353294
(43) Date de publication de la demande: 15.10.2014
(73) Titulaire: Fives Filling & Sealing, 44140 Le Bignon (FR)
(72) Inventeur: Paud, Pascal, 44850 Le Cellier (FR); Toutain, Nicolas, 44 760 Les Moutiers en Retz (FR)
(74) Mandataire: Lavoix

(56) Documents cités:
- WO-A1-01/40737
- WO-A1-2008/112423
- DE-C1- 19 735 622
- FR-A1- 2 597 025
- FR-A1- 2 878 911

## Description

La présente invention concerne la préparation et la dépose de fluides visqueux, tels que de la colle ou un produit d'étanchéité, sous la forme de cordons continus ou discontinus, avec un contrôle de la qualité de la dépose, tant du point de vu composition du cordon, comme notamment la proportion des produits s'il s'agit d'un mélange, que du point de vu homogénéité du cordon, comme l'absence de bulles d'air susceptibles d'altérer la forme du cordon. Elle trouve notamment une application dans le domaine automobile pour la dépose de joints ou de colle pour la miroiterie, ou encore à tout domaine dans lequel un assemblage d'éléments par collage est requis.

De tels fluides visqueux peuvent comprendre un ou plusieurs produits. Généralement, le cordon est constitué d'un mélange de deux produits, à savoir une résine et un catalyseur. Il peut également n'être composé que d'un seul produit. Dans ce cas, le durcissement du cordon résulte, par exemple, de l'évaporation d'un composant du produit.

Parmi les techniques d'assemblage actuelles, on retrouve les différents types de soudure qui permettent l'assemblage des métaux ferreux entre eux, voire aussi d'alliages légers. Néanmoins, en particulier dans le domaine automobile, on recherche en permanence à obtenir des véhicules toujours plus légers.

Aussi, les plastiques et autres composites sont venus remplacés diverses pièces autrefois métalliques. Ces matériaux sont également intéressants pour leur coût, en comparaison avec le coût de l'aluminium par exemple. Cependant, l'assemblage fiable et efficace de matériaux hétérogènes est difficile.

Pour résoudre ce problème, on peut ajouter des inserts permettant un assemblage par vis par exemple. Mais une telle solution peut devenir coûteuse et requiert un temps d'assemblage élevé.

Une autre solution intéressante est l'assemblage par collage qui permet à la fois une bonne tenue en terme mécanique et un rattrapage des jeux lors de l'assemblage. L'utilisation de colle ou de joint en mono-composant a été introduite il y a maintenant plusieurs dizaines d'années.

Mais la recherche d'une tenue mécanique toujours meilleure, ainsi que la nécessitée réglementaire de remplacer certaines colles mono-composant par d'autres produits car elles contiennent des substances peu recommandées (REACH), oriente vers une technique d'assemblage plus propre et conforme aux recommandations, en utilisant de nouveaux produits. Par contre, ces nouveaux produits requièrent des mises en oeuvre plus précises et un contrôle de la qualité accrue si l'on veut garantir les spécificités mécaniques ou d'étanchéité.

Les procédés actuellement disponibles utilisent généralement des pompes pneumatiques pour dépoter les produits, puis des pompes doseuses avant de procéder au mélange. Les pompes pneumatiques provoquent des coups de bélier et donc des variations de pression importantes dans l'installation incompatibles avec un dosage précis des produits. Les pompes doseuses permettent de palier partiellement ce problème.

Le document WO 01/40737 A1 décrit un dispositif de préparation d'un mélange visqueux, comprenant au moins deux produits tels qu'une résine et un catalyseur, apte à permettre la formation d'un cordon constitue du produit ou mélange visqueux. Le dispositif comprend, pour chaque produit, un contenant distinct, et des moyens de dépose aptes à permettre la dépose du cordon sur le substrat.

Cependant ces procédés n'intègrent pas de solution de contrôle, notamment de l'absence de bulles d'air dans les produits, et obligent les opérateurs à faire des purges lors des changements de futs d'alimentation, gaspillant du produit, dont il émane de plus des vapeurs souvent mal odorantes.

D'autres procédés utilisent des vérins doseurs, plus précis en termes de dosage, mais dont la capacité limite la quantité utilisable pour la dépose de produit. Ceci ne permet donc pas une dépose en continue. De plus, le résiduel de produit au fond du vérin n'est pas ou peu purgé, ce qui génère une zone morte avec du produit se périmant et pouvant avoir une influence négative sur la qualité du produit.

L'invention a pour objet de remédier à ces problèmes, parmi d'autres. Elle vise notamment à proposer un dispositif et un procédé moins coûteux, en particulier avec réduction du gaspillage du ou des produits, qui soit plus inoffensif pour l'opérateur qui n'a plus à purger lors des changements de futs d'alimentation et qui ne souffre donc plus de fortes émanations de vapeurs de produits, le dispositif étant plus compact, et la qualité du cordon déposé étant garantie. Elle permet aussi une dépose en continue des cordons quelle que soit la longueur du cordon, sans zone morte, et avec un dosage précis. Elle permet encore une dépose discontinue sans étape de rechargement par opposition aux solutions avec vérin, améliorant ainsi la disponibilité machine.

Ainsi, l'invention a pour objet, selon un premier aspect, un dispositif de préparation et de contrôle en continu d'un produit visqueux, ou d'un mélange visqueux comprenant au moins deux produits tel qu'une résine et un catalyseur, apte à permettre la formation d'un cordon constitué du produit ou du mélange visqueux et la dépose de ce cordon sur un substrat.

Le dispositif comprend, pour chaque produit, un contenant distinct, tel qu'un fut, et des moyens de dépose aptes à permettre la dépose du cordon sur le substrat et reliés à chaque contenant par un circuit d'alimentation.

Le dispositif comprend également, pour chaque produit, une pompe à vis électrique unique pour le dépotage et le dosage du produit contenu dans le contenant, et des moyens de contrôle disposés sur le circuit. Ces moyens de contrôle sont aptes à contrôler d'une part le débit du dépotage, et d'autre part l'absence de bulles d'air dans le produit ou mélange de produits,

Le dispositif comprend encore des moyens de prévention contre la formation de bulles d'air aptes à empêcher, avant la dépose du produit, ou du mélange de produits, la formation de bulles d'air dans ce produit ou mélange de produits.

Suivant certains modes de réalisation, le dispositif comprend en outre une ou plusieurs des caractéristiques suivantes, prise(s) isolément ou suivant toutes les combinaisons techniquement possibles :
- les moyens de contrôle comprennent des moyens de mesure de la densité du produit ou du mélange de produits,
- les moyens de contrôle comprennent des moyens de mesure du débit du produit ou du mélange de produits,
- les moyens de mesure du débit, et les moyens de mesure de la densité, du produit ou du mélange de produits, sont distincts l'un de l'autre, ou combinés,
- les moyens de prévention comprennent un plateau sur lequel repose la pompe, le plateau étant pourvu, en sa périphérie, d'un moyen d'étanchéité, tel qu'un joint, et comprennent au moins une ligne d'injection reliée par un point de connexion au plateau, ce plateau étant apte à coulisser le long de la paroi interne du contenant et étant solidaire d'une extrémité de la vis électrique, afin de permettre la sortie du produit contenu dans la contenant vers le circuit lorsque la vis de la pompe électrique est mise en rotation, à le joint étant apte à assurer l'étanchéité par contact avec la paroi interne du contenant entre la partie du volume du contenant située d'un côté du plateau et la partie de ce volume située de l'autre côté du plateau ; lla ligne d'injection permettant l'injection d'un gaz sous pression dans le volume situé du côté du plateau opposé au circuit, appelé volume sous plateau, ou permettant la mise au vide de ce volume, en sorte d'éviter le gaspillage ou l'entrée d'air lors d'un changement de contenant,
- les moyens de prévention comprennent un capteur de pression disposé sur la ligne d'injection ou sur un point de connexion spécifique dans le plateau, permettant de mesurer la pression dans le volume sous plateau, de sorte d'éviter le désamorçage de la pompe à vis électrique lors d'un changement de contenant qui serait de nature à provoquer des entrées d'air,
- les moyens de prévention comprennent un vérin apte à assurer le déplacement du plateau dans le contenant et à maintenir sous pression le volume contenu sous le plateau, pour éviter les entrées d'air.

L'invention a également pour objet, selon un deuxième aspect, un procédé de préparation et de contrôle en continu d'un produit visqueux, ou d'un mélange visqueux comprenant au moins deux produits tel qu'une résine et un catalyseur, pour former un cordon constitué du produit ou mélange visqueux et déposer ce cordon sur un substrat.

Le procédé comprend la mise à disposition, par l'intermédiaire d'un circuit d'alimentation de chaque produit contenu dans un contenant distinct, tel qu'un fut, dans des moyens de dépose aptes à permettre la dépose du cordon sur le substrat.

La mise à disposition de chaque produit comprend une étape de dépotage et de dosage du produit contenu dans le contenant, par l'intermédiaire d'une pompe à vis électrique unique, une étape de contrôle par des moyens de contrôle disposés sur le circuit, et une étape de prévention contre la formation de bulles d'air par des moyens de prévention.

L'étape de contrôle permet de contrôler d'une part le débit de dépotage, et d'autre part l'absence de bulles d'air dans le produit ou mélange de produits.

L'étape de prévention permet d'empêcher, avant la dépose du produit ou mélange de produits, la formation de bulles d'air dans ce produit ou mélange de produit.

Suivant certains modes de mise en oeuvre, le procédé comprend en outre une ou plusieurs des caractéristiques suivantes, prise(s) isolément ou suivant toutes les combinaisons techniquement possibles :
- l'étape de contrôle comprend la mesure de la densité du produit, ou mélange de produits,
- l'étape de contrôle comprend la mesure du débit du produit ou mélange de produit,
- la mesure du débit, et la mesure de la densité, du produit ou mélange de produits, sont réalisées par des moyens de mesure distincts l'un de l'autre, ou combinés,

Pour faciliter les changements de contenant et éviter le gaspillage ou l'entrée d'air, on peut prévoir que la pompe repose sur un plateau qui fait partie des moyens de prévention contre la formation de bulles d'air dans le produit ou mélange de produits, apte à coulisser le long de la paroi interne du contenant et solidaire d'une extrémité de pompe en sorte de permettre la sortie du produit contenu dans le contenant vers le circuit lorsque la vis de la pompe est mise en rotation. Le plateau est pourvu, en sa périphérie, d'un moyen d'étanchéité, tel qu'un joint, qui fait également partie des moyens de prévention contre la formation de bulles d'air dans le produit ou mélange de produits, apte à assurer l'étanchéité par contact avec la paroi interne du contenant entre la partie du volume du contenant située d'un côté du plateau et la partie de ce volume située de l'autre côté du plateau. Le plateau est également pourvu d'au moins un point de connexion relié à une ligne d'injection qui fait également partie des moyens de prévention contre la formation de bulles d'air dans le produit ou mélange de produits, en sorte de permettre l'injection d'un gaz sous pression dans le volume situé du côté du plateau opposé au circuit, appelé volume sous plateau, ou de permettre la mise au vide de ce volume.

Pour faciliter la relevée du plateau lors d'un changement de contenant, l'étape de prévention contre la formation de bulles d'air comprend alors une étape d'injection d'un gaz dans le volume sous plateau au travers du point de connexion à une pression supérieure à celle exercée par le plateau sur le volume sous plateau, de sorte de soulever celui-ci, notamment lors d'un changement de contenant,

Cependant, avec l'utilisation d'une pompe à vis électrique, il est préférable de prévoir des moyens pour ne pas désamorcer l'alimentation de la pompe, en particulier lors du changement de contenant.

Aussi, de préférence, les moyens de prévention contre la formation de bulles d'air comprennent également un capteur de pression qui est disposé sur la ligne d'injection ou sur un point de connexion spécifique dans le plateau,.

L'étape de prévention contre la formation des bulles d'air comprend, lors de la descente du plateau dans le contenant, un contrôle de la pression dans le volume sous plateau au point de connexion spécifique ou sur la ligne d'injection, et une mise au vide de ce volume sous plateau lorsque la pression dans ce volume sous plateau devient supérieure à la pression atmosphérique, de sorte d'éviter le désamorçage de la pompe à vis électrique lors d'un changement de contenant qui serait de nature à provoquer des entrées d'air.

Ainsi, le dispositif et le procédé de l'invention permettent la dépose de cordons de produits visqueux, mono ou bi-composants, ou multi-composants lorsque l'on doit incorporer des charges ou autres adjuvants, afin, par exemple, d'effectuer l'assemblage par collage d'éléments constitués de matériaux de natures différentes, ou l'étanchéité d'un tel assemblage.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un exemple de dispositif selon l'invention pour la réalisation d'un cordon à partir d'un mélange de deux produits,
- figure 2 : représentation schématique détaillée du dispositif de la figure 1, limitée au voisinage d'un contenant.

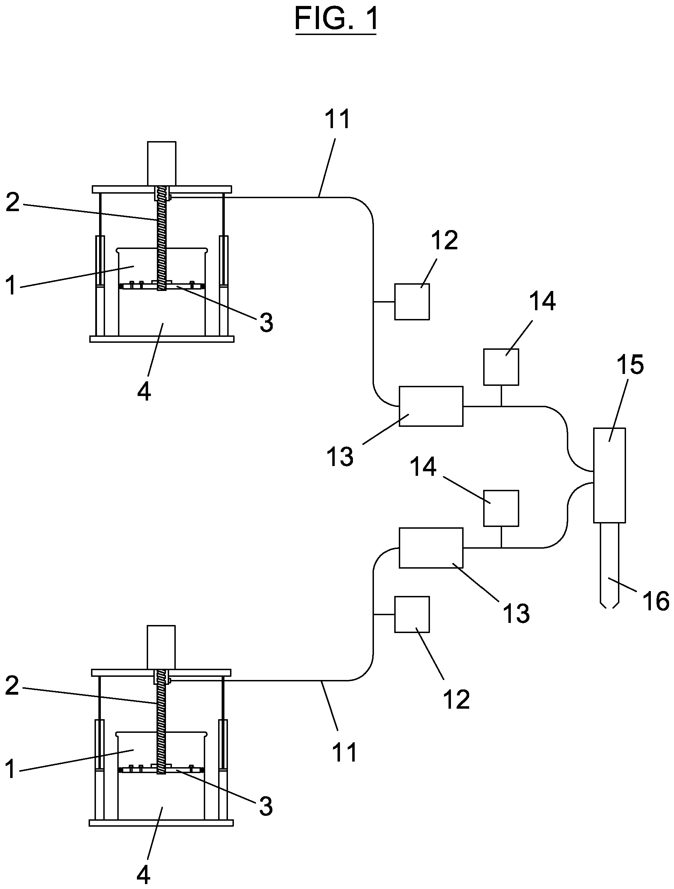

Sur la figure 1, on peut voir schématiquement représentée un exemple de dispositif selon l'invention, pour la mise en oeuvre du procédé avec deux produits, par exemple une résine et un catalyseur.

Pour le dépotage et le dosage du premier produit, par exemple une résine, un premier circuit 11 d'amenée de produit, relie un premier contenant 1, tel qu'un fut 1, dans lequel se trouve un premier produit, et des premiers moyens de dépotage continu 2, à des moyens de dépose 15, 16.

Pour le dépotage et le dosage du deuxième produit, par exemple un catalyseur, un deuxième circuit 11 d'amenée de produit, relie un deuxième contenant 1, tel qu'un fut 1, dans lequel se trouve un deuxième produit, et des deuxièmes moyens de dépotage continu 2, aux moyens de dépose 15, 16.

Chaque circuit 11 est équipé de moyens de contrôle 12, 13, 14, en particulier pour le contrôle du débit et de la densité du produit, mais aussi pour le contrôle de la pression en divers points.

Ces moyens de contrôle comprennent par exemple, sur chaque circuit 11, un débitmètre 13 et des capteurs de pression 12, 14 respectivement en amont et en aval du débitmètre 13.

Les deux circuits 11 se rejoignent dans des moyens de dépose 15, 16. Ces moyens de dépose 15, 16 comprennent une buse 16 de dépose, assemblée sur un réservoir 15 qui assure le mélange homogène des deux produits.

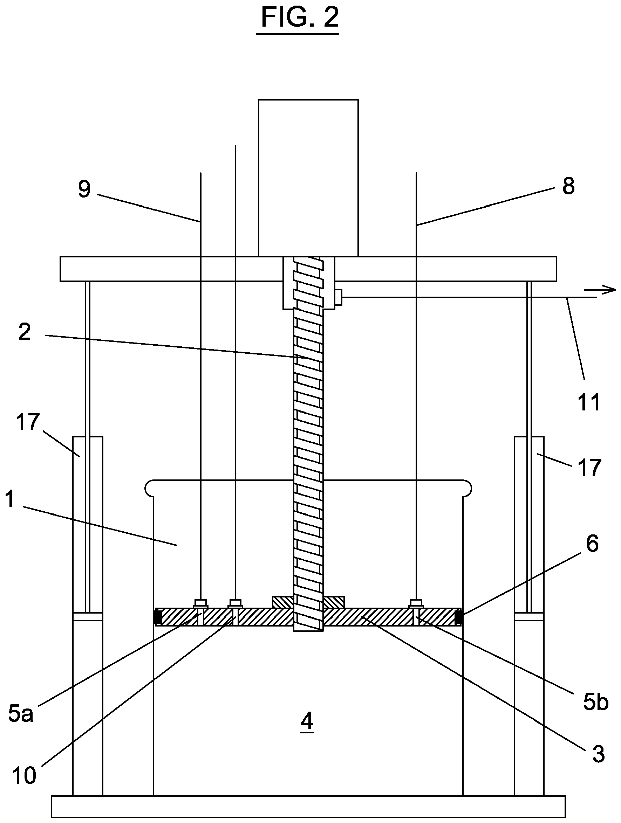

Pour chaque produit, les moyens de contrôle 12, 13, 14 sont reliés à des moyens d'adaptation, non représentés sur les figures 1 et 2, qui permettent d'adapter le débit du produit délivré par les moyens de dépotage 2 à partir du contenant 1,.

Le système de contrôle-commande ainsi défini permet d'adapter le débit d'un produit ou de l'autre en fonction des résultats donnés par les mesures de débit, et éventuellement de qualité (densité). Cela permet aussi une flexibilité du dispositif lors d'un changement d'un produit à un autre avec des proportions de dosage différentes.

Dans l'exemple représenté aux figures 1 et 2, les moyens de dépotage continu 2 comprennent une pompe à vis sans fin électrique unique 2.

Les moyens d'adaptation peuvent alors comprendre un variateur de vitesse (mécanique et/ou électrique) permettant de faire varier la vitesse de rotation de la vis 2

L'utilisation d'une pompe électrique 2 permet notamment d'éviter les problèmes de fluctuation de pression des pompes pneumatiques. Chaque pompe électrique 2 intègre donc à la fois la fonction de dépotage du produit et la fonction de dosage du produit.

De telles pompes 2 nécessitent de toujours rester en contact avec le produit pour éviter le désamorçage lors du changement de contenant 1.

Comme on peut le voir plus précisément par l'intermédiaire de la figure 2, en production normale, le plateau 3 sur lequel est placée la pompe 2 est maintenu en pression par un vérin 17 sur le fut 1 de produit,

Un joint 6 sur la périphérie du plateau 3 permet d'assurer l'étanchéité par contact avec la paroi interne du contenant 1, et ainsi de protéger contre les risques de désamorçage.

Les risques de désamorçage subsistent cependant lors des changements de fut 1 de produits que la pompe 2 utilisée soit de type pneumatique ou électrique.

Une solution connue, utilisée avec les pompes pneumatiques, consiste à réaliser une purge en forçant le débit de la pompe jusqu'à temps que le produit soit sans bulles d'air. Cette solution présente l'inconvénient de gaspiller du produit et le risque pour l'opérateur de respirer les vapeurs émises pendant la purge, vapeurs pouvant présenter des risques. De plus, les nouveaux produits ont un coût plus élevés que les précédents produits mono composants, il faut donc limiter le gaspillage.

Aussi, il est nécessaire de prévoir la mise en place d'une solution permettant un changement de fut 1 d'alimentation rapide.

Ainsi, un point 5a de connexion est disposé sur le plateau 3, relié à une ligne 9 d'injection de gaz. Lorsque le fut 1 est vide, ce qui peut être détecté, par exemple, par une absence de débit de produit au niveau du débitmètre 13, un signal est envoyé à l'opérateur qui engage la procédure de changement de fut 1 d'alimentation. Cette détection peut aussi être réalisée par une détection de butée basse dans le fut 1.

Tout d'abord, la pompe 2 est arrêtée, la pression exercée par le plateau 3 au moyen du vérin 17 est coupée, et le vérin 17 est ensuite remonté de façon à permettre le dégagement du fut 1.

Dans la mesure où les produits sont parfois très visqueux, le plateau peut avoir des difficultés à remonter sans force mécanique complémentaire. Pour résoudre ce problème, de la pression est injectée, de préférence moins de 6 bars, sous le plateau 3, dans le volume 4 disposé du côté de ce plateau 3 opposé au début du circuit 11 d'amenée de produit. Cela a notamment pour effet de décoller le plateau du produit resté au fond du fut 1.

En plus de la séparation du plateau 3, cette pression permet aussi le nettoyage de cette ligne 9 qui pourrait être polluée par le produit.

Une fois le plateau 3 remonté, l'opérateur peut alors saisir le contenant 1 vide pour l'évacuer et mettre en place le nouveau contenant plein de produit. L'opérateur indique au dispositif, par exemple au moyen d'un tableau de commande, la fin de la mise en place pour que l'étape suivante de la procédure commence.

Le plateau 3 descend alors progressivement jusqu'au fut 1 grâce au pilotage du vérin 17 dédié à ce mouvement. Un capteur de pression placé sur la ligne 9 ou sur un point de connexion supplémentaire 10, permet de suivre la pression.

Tant que la pression dans le volume 4 est à la pression atmosphérique, c'est qu'il n'y a pas eu accostage du plateau 3 sur le fut 1. Dès que la pression dans ce volume 4 commence à augmenter, cela signifie que le plateau 3 commence sa descente dans le fut 1. L'utilisation d'un capteur de pression permet de s'affranchir de la hauteur du fut 1 et de ses variations pour le positionnement du plateau 3 dans le fut 1.

Lorsque le plateau 3 commence sa descente dans le fut 1, il faut supprimer l'air situé entre le plateau 3 et le produit qui est alors dans un espace confiné. Le vérin 17 assurant le mouvement de descente n'est plus piloté et ses chambres sont mises à l'air de façon à donner une liberté de mouvement au plateau 3.

Un dispositif de mise au vide de l'espace 4 confiné est alors mis en route (par exemple : pompe à vide, éjecteur, etc...). Le dispositif précisément utiliser est à déterminer en fonction du niveau de vide requis, mais il est préférable de rester à une pression en dessous de 10 mbar absolu. Ce dispositif est connecté au point de connexion 5a par l'intermédiaire de la ligne 9 ou à un autre point de connexion supplémentaire 5b par l'intermédiaire d'une autre ligne 8.

La valeur de pression dans l'espace confiné 4 va alors décroitre vers le vide. Cette décroissance est contrôlée. Si le vide n'est pas obtenu au bout d'un certain temps déterminé, un défaut est énoncé par le dispositif pour avertir l'opérateur d'un problème dans la procédure.

Du fait du vide dans le volume 4, le plateau 3 va descendre doucement sans assistance du vérin 17 vers le produit. Au bout d'un lapse de temps à déterminer, en fonction notamment de la capacité du dispositif de mise au vide, la valeur de vide va se stabiliser en dessous du seuil requis (sinon, un autre défaut sera indiqué à l'opérateur).

Le dispositif de vide est alors isolé, tout comme la ligne de connexion supplémentaire 8. Le vérin 17 permettant le contact du plateau 3 avec le produit est remis en route et la pompe 2 peut être redémarrée sans risque de désamorçage.

Il peut se produire, du fait de la montée en pression, une légère remontée de produit dans l'extrémité de la ligne supplémentaire 8 ou 9. Dans le cas de l'utilisation d'une même ligne supplémentaire 9 pour la mise sous pression et la mise sous vide du volume 4 placé sous le plateau 3, la remontée de produit pourra être purgée lors de la mise en pression pour décoller le plateau au moment du prochain changement de fut 1.

Cette procédure permet donc de réduire fortement les pertes de produits lors de la remise en pression des futs 1 neufs et aussi de protéger l'opérateur des vapeurs émanant des produits, en particulier du fait de l'absence de purge et de produits résiduels dus à celle-ci.

L'absence de purge par une vanne manuelle simplifie aussi la procédure dans le cas de produits inflammables.

De plus, il est possible de mettre l'évacuation du dispositif de tirage au vide à l'extérieur et donc d'éviter un point de formation d'une « ATEX » (atmosphère explosive).

Un tel dispositif rend l'usage de pompes à vis 2 plus aisé, ce qui présente d'autres avantages pour l'ensemble du dispositif :
- pas de déstructuration ou de dénaturation du produit, contrairement à ce qui peut se produire avec des pompes doseuses à engrenages,
- l'asservissement électrique d'une telle pompe 2 permet un débit contrôlé précisément avec un faible temps de réponse, même avec un produit visqueux,
- l'asservissement électrique permet aussi de faire une extrusion « à la demande », donc des cordons continus ou discontinus de façon automatique, ou manuelle,
- pas d'utilisation de vannes proportionnelles provoquant des pertes de charges différentes en fonction de leur ouverture, donc stabilité de la pression dans les différents points du circuit,
- utilisation d'une seule pompe 2 par produit au lieu d'une pompe doseuse et d'une pompe de dépotage, avec une longueur limité de flexible entre le fut 1 de produit et le point de dépose.

Pour assurer un contrôle en continu, tant pour le dosage que pour la qualité du cordon déposé, comme évoqué plus haut, un débitmètre 13 est mis en place sur chaque circuit 11, pour quantifier la quantité de produit délivrée.

En utilisant des compteurs massiques, on peut s'affranchir des contraintes de densité évoluant avec la température et la mesure est ainsi très précise. La présence de tels instruments de mesure sur chacun des circuits 11 permet donc la mesure et la correction en temps réel par des boucles d'asservissement de la commande de chacun des variateurs de vitesse pilotant les pompes 2. Il est donc ainsi possible de garantir les proportions (en analysant le débit sur le premier circuit 11 par rapport à celui sur le deuxième), ainsi que la quantité de produit mélangé délivré.

Cela permet d'assurer une constante dans la forme géométrique du cordon, sous réserve de déposer le produit avec une vitesse linéaire constante.

Par ailleurs, la capabilité d'une installation est mesurée par la régularité géométrique du cordon déposé et la qualité de celui-ci, notamment l'absence de bulles d'air, et la proportion s'il s'agit d'un mélange.

Pour assurer l'homogénéité du cordon, on peut mesurer l'absence de bulles d'air dans le cordon. Ceci peut être réalisé par des systèmes externes, et à postériori de la dépose, qui réalisent un contrôle par exemple par mesure optique et détection de formes. Cependant, ces systèmes sont complexes et peu flexibles si on veut produire une grande variété de formes de cordon. Il est donc préférable de contrôler en amont l'absence de bulles d'air. Le dispositif étant étanche au niveau du mélangeur (sous pression, on ne peut pas avoir de bulles d'air qui s'introduisent dans les flexibles), la présence de bulles d'air provient donc de l'alimentation. Les débitmètres 13 vont donc avoir une double fonction : contrôler le débit et contrôler la présence de bulles d'air. Cela peut se faire avec un débitmètre qui embarque des fonctions de mesure de densité ou mesure bi-phasique (brusque variation de densité). En variante de réalisation, il est également possible d'équiper chaque ligne 11 d'un débitmètre sans fonction mesure de la densité, associé à un densimètre. La présence de gaz (donc de bulles d'air) va donc être détectée et signalée à l'opérateur par ce suivi continu de la valeur de la densité.

Ainsi, cette nouvelle solution permet la dépose de cordons de produits visqueux en mono ou bi-composants (voir d'autres composants si on doit incorporer des charges ou autres adjuvants) afin d'effectuer du collage ou de l'étanchéité pour des matériaux de nature différentes.

## Revendications

1. Dispositif de préparation et de contrôle en continu d'un produit visqueux, ou d'un mélange visqueux comprenant au moins deux produits tel qu'une résine et un catalyseur, apte à permettre la formation d'un cordon constitué dudit produit ou mélange visqueux et la dépose de ce dit cordon sur un substrat, le dispositif comprenant, pour chaque produit, un contenant (1) distinct, tel qu'un fut (1), et des moyens de dépose (15,16) aptes à permettre la dépose dudit cordon sur le substrat et reliés à chaque contenant (1) par un circuit (11), **caractérisé en ce qu'**il comprend, pour chaque produit, une pompe à vis électrique unique (2) de dépotage et de dosage du produit contenu dans le contenant (1), des moyens de contrôle (12, 13, 14) disposés sur le circuit (11) et aptes à contrôler d'une part le débit du dépotage et d'autre part l'absence de bulles d'air dans le produit, ou le mélange de produits, et des moyens de prévention (3, 6, 8, 9, 17) contre la formation de bulles d'air aptes à empêcher, avant la dépose du produit, ou du mélange de produits, la formation de bulles d'air dans ce produit ou mélange de produits, lesdits moyens de prévention (3, 6, 8, 9, 17) comprenant un plateau (3) sur lequel repose la pompe (2), ledit plateau étant pourvu, en sa périphérie, d'un moyen d'étanchéité (6), tel qu'un joint (6), et comprennent au moins une ligne d'injection (8, 9) reliée par un point de connexion (5a, 5b) audit plateau (3), ledit plateau (3) étant apte à coulisser le long de la paroi interne du contenant (1) et étant solidaire d'une extrémité de la vis électrique (2), afin de permettre la sortie du produit contenu dans la contenant (1) vers le circuit (11) lorsque la vis électrique (2) est mise en rotation, ledit joint (6) étant apte à assurer l'étanchéité par contact avec la paroi interne du contenant (1) entre la partie du volume du contenant (1) située d'un côté (4) du plateau (3) et la partie de ce volume située de l'autre côté du plateau (3), la ligne d'injection (8, 9) permettant l'injection d'un gaz sous pression dans le volume (4) situé du côté du plateau (3) opposé au circuit (11), appelé volume sous plateau (4), ou permettant la mise au vide de ce dit volume (4), en sorte d'éviter le gaspillage, ou l'entrée d'air, lors du changement de contenant.

2. Dispositif selon la revendication 1, **caractérisé en ce que** les moyens de contrôle (12, 13, 14) comprennent des moyens (13) de mesure de la densité du produit, ou du mélange de produits.

3. Dispositif selon l'une quelconque des revendications 1 et 2, **caractérisé en ce que** les moyens de contrôle (12, 13, 14) comprennent des moyens (13) de mesure du débit du produit ou du mélange de produit.

4. Dispositif selon les revendications 2 et 3, **caractérisé en ce que** les moyens de mesure du débit, et les moyens de mesure de la densité, du produit ou mélange de produits, sont distincts l'un de l'autre ou combinés (13).

5. Dispositif selon l'une quelconque des revendications 1 à 4, **caractérisé en ce que** les moyens de prévention (3, 6, 8, 9, 17) comprennent un capteur de pression disposé sur la ligne d'injection (8, 9) ou sur un point de connexion spécifique (10) dans le plateau (3), permettant de mesurer la pression dans le volume sous plateau (4), de sorte d'éviter le désamorçage de la pompe à vis électrique (2) lors d'un changement de contenant (1) qui serait de nature à provoquer des entrées d'air.

6. Dispositif selon l'une quelconque des revendications 1 et 5, **caractérisé en ce que** les moyens de prévention (3, 6, 8, 9, 17) comprennent un vérin (17) apte à assurer le déplacement du plateau (3) dans le contenant (1) et à maintenir le volume sous plateau (4) en pression pour éviter les entrées d'air.

7. Procédé de préparation et de contrôle en continu d'un produit visqueux, ou d'un mélange visqueux comprenant au moins deux produits tel qu'une résine et un catalyseur, pour former un cordon constitué dudit produit ou mélange visqueux et déposer ce dit cordon sur un substrat, comprenant la mise à disposition, par l'intermédiaire d'un circuit d'alimentation (11), de chaque produit contenu dans un contenant (1) distinct, tel qu'un fut (1), dans des moyens de dépose (15,16) aptes à permettre la dépose dudit cordon sur le substrat, **caractérisé en ce que** la mise à disposition de chaque produit comprend une étape de dépotage et de dosage du produit contenu dans le contenant (1), par l'intermédiaire d'une pompe à vis électrique (2), une étape de contrôle, par des moyens de contrôle (12, 13, 14) disposés sur le circuit (11), pour contrôler d'une part le débit de dépotage, et d'autre part l'absence de bulles d'air dans le produit, ou le mélange de produits, et une étape de prévention contre la formation de bulles d'air, par des moyens de prévention (3, 6, 8, 9, 17), pour empêcher, avant la dépose du produit, ou du mélange de produits, la formation de bulles d'air dans ce produit ou mélange de produits, les moyens de prévention (3, 6, 8, 9, 17) comprenant un plateau (3) sur lequel repose la pompe (2), ledit plateau étant pourvu, en sa périphérie, d'un moyen d'étanchéité (6), tel qu'un joint (6), et comprennent au moins une ligne d'injection (8, 9) reliée par un point de connexion (5a, 5b) audit plateau (3), ledit plateau (3) étant apte à coulisser le long de la paroi interne du contenant (1) et étant solidaire d'une extrémité de la vis électrique (2), afin de permettre la sortie du produit contenu dans la contenant (1) vers le circuit (11) lorsque la vis électrique (2) est mise en rotation, ledit joint (6) étant apte à assurer l'étanchéité par contact avec la paroi interne du contenant (1) entre la partie du volume du contenant (1) située d'un côté (4) du plateau (3) et la partie de ce volume située de l'autre côté du plateau (3), la ligne d'injection (8, 9) permettant l'injection d'un gaz sous pression dans le volume (4) situé du côté du plateau (3) opposé au circuit (11), appelé volume sous plateau (4), ou permettant la mise au vide de ce dit volume (4), l'étape de prévention contre la formation des bulles d'air comprenant une étape d'injection d'un gaz dans le volume sous plateau (4) au travers du point de connexion (5a, 5b) à une pression supérieure à celle exercée par le plateau (3) sur le volume sous plateau (4), afin de soulever celui-ci, pour faciliter la relevée du plateau (3) lors d'un changement de contenant (1).

8. Procédé selon la revendication 7, **caractérisé en ce que** l'étape de contrôle comprend la mesure de la densité du produit, ou du mélange de produits.

9. Procédé selon l'une quelconque des revendications 7 et 8, **caractérisé en ce que** l'étape de contrôle comprend la mesure du débit du produit ou du mélange de produit.

10. Procédé selon les revendications 8 et 9, **caractérisé en ce que** la mesure du débit, et la mesure de la densité, du produit ou mélange de produits, sont réalisées par des moyens de mesure distincts l'un de l'autre, ou combinés (13).

11. Procédé selon l'une quelconque des revendications 7 à 10, les moyens de prévention (3, 6, 8, 9, 17) comprenant un capteur de pression disposé sur la ligne d'injection (8, 9) ou sur un point de connexion spécifique (10) dans le plateau (3), **caractérisé en ce que**, l'étape de prévention contre la formation des bulles d'air comprend, lors de la descente du plateau (3) dans le contenant (1), un contrôle de la pression dans le volume sous plateau (4) au point de connexion spécifique (10) ou sur la ligne d'injection (8, 9), et la mise au vide de ce volume sous plateau (4) lorsque la pression dans ce volume sous plateau (4) devient supérieure à la pression atmosphérique, de sorte d'éviter le désamorçage de la pompe à vis électrique (2) lors d'un changement de contenant (1) qui serait de nature à provoquer des entrées d'air.

## Patentansprüche

1. Vorrichtung zum kontinuierlichen Herstellen und Steuern eines viskosen Produktes oder einer viskosen Mischung, die mindestens zwei Produkte, wie zum Beispiel ein Harz und einen Katalysator enthält, die geeignet ist, das Ausbilden eines aus dem viskosen Produkt oder der viskosen Mischung gebildeten Stranges und das Ablagern dieses besagten Stranges auf einem Substrat zu ermöglichen, wobei die Vorrichtung für jedes Produkt einen unterschiedlichen Behälter (1), zum Beispiel ein Fass (1), und Mittel zum Ablagern (15, 16) aufweist, die geeignet sind, das Ablagern des Stranges auf dem Substrat zu ermöglichen, und die durch einen Kreis (11) mit jedem Behälter (1) verbunden sind, **dadurch gekennzeichnet, dass** sie für jedes Produkt aufweist:
eine einzige elektrische Schraubenpumpe (2) zum Entladen und Dosieren des in dem Behälter (1) enthaltenen Produktes,
Steuermittel (12, 13, 14), die an dem Kreis (11) angeordnet sind und geeignet sind, einerseits den Entladedurchsatz und andererseits die Abwesenheit von Luftblasen in dem Produkt oder der Produktmischung zu steuern, und Mittel zur Vorbeugung (3, 6, 8, 9, 17) der Ausbildung von Luftblasen,
die geeignet sind, vor dem Ablagern des Produktes oder der Produktmischung die Ausbildung von Luftblasen in diesem Produkt oder dieser Produktmischung zu verhindern, wobei die Vorbeugungsmittel (3, 6, 8, 9, 17) eine Platte (3) aufweisen,
auf der die Pumpe (2) aufliegt, wobei die Platte an ihrem Rand mit einem Dichtungsmittel (6), zum Beispiel einer Dichtung (6) versehen ist, und mindestens eine Einspritzleitung (8, 9) aufweisen, die an einem Verbindungspunkt (5a, 5b) mit der Platte (3) verbunden ist,
wobei die Platte (3) in der Lage ist, entlang der Innenwand des Behälters (1) zu gleiten und mit einem Ende der elektrischen Schraube (2) fest verbunden ist, um das Ausgeben des in dem Behälter (1) enthaltenen Produktes an den Kreis (11) zu ermöglichen, wenn die elektrische Schraube (2) zum Drehen gebracht wird, wobei die Dichtung (6) in der Lage ist,
die Dichtigkeit durch Kontakt mit der Innenwand des Behälters (1) zwischen dem Teil des Volumens des Behälters (1), der sich auf einer Seite (4) der Platte (3) befindet, und dem Teil dieses Volumens, der sich auf der anderen Seite der Platte (3) befindet, sicherzustellen, wobei die Einspritzleitung (8, 9) das Einspritzen eines Gases unter Druck in das Volumen (4) ermöglicht, das sich auf der Seite der Platte (3) entgegengesetzt zu dem Kreis (11) befindet,
das als unter-Platte-Volumen (4) bezeichnet wird, oder das Vakuumieren dieses besagten Volumens (4) ermöglicht, so dass das Verschwenden oder das Eindringen von Luft während des Wechselns eines Behälters verhindert wird.

2. Vorrichtung gemäß Anspruch 1, **dadurch gekennzeichnet, dass** die Steuermittel (12, 13, 14) Mittel (13) zum Messen der Dichte des Produktes oder der Produktmischung aufweisen.

3. Vorrichtung gemäß irgendeinem der Ansprüche 1 und 2, **dadurch gekennzeichnet, dass** die Steuermittel (12, 13, 14) Mittel (13) zum Messen des Durchsatzes des Produktes oder der Produktmischung aufweisen.

4. Vorrichtung gemäß den Ansprüchen 2 und 3, **dadurch gekennzeichnet, dass** sich die Mittel zum Messen des Durchsatzes und die Mittel zum Messen der Dichte des Produktes oder der Produktmischung voneinander unterscheiden oder kombiniert (13) sind.

5. Vorrichtung gemäß irgendeinem der Ansprüche 1 bis 4, **dadurch gekennzeichnet, dass** die Vorbeugungsmittel (3, 6, 8, 9, 17) einen Drucksensor aufweisen, der an der Einspritzleitung (8, 9) oder an einem bestimmten Verbindungspunkt (10) in der Platte (3) angeordnet ist, der ein Messen des Drucks in dem unter-Platte-Volumen (4) ermöglicht, so dass das Leerlaufen der elektrischen Schraubenpumpe (2) bei einem Wechseln eines Behälters (1) verhindert wird, welches derart wäre, dass es das Eindringen von Luft verursachen würde.

6. Vorrichtung gemäß irgendeinem der Ansprüche 1 und 5, **dadurch gekennzeichnet, dass** die Vorbeugungsmittel (3, 6, 8, 9, 17) einen Zylinder (17) aufweisen, der in der Lage ist, das Verlagern der Platte (3) in dem Behälter (1) sicherzustellen und das unter-Platte-Volumen (4) unter Druck zu halten, um das Eindringen von Luft zu verhindern.

7. Verfahren zum durchgehenden Herstellen und Steuern eines viskosen Produktes oder einer viskosen Mischung, die mindestens zwei Produkte, zum Beispiel ein Harz und einen Katalysator enthält, um einen Strang auszubilden, der aus dem viskosen Produkt oder der viskosen Mischung gebildet ist, und diesen besagten Strang auf einem Substrat abzulagern, aufweisend das zur-Verfügung-Stellen, mittels eines Versorgungskreises(11), jedes in einem unterschiedlichen Behälter (1), zum Beispiel einem Fass (1) enthaltenen Produktes, in Ablagerungsmitteln (15, 16) die geeignet sind, das Ablagern des Strangs auf dem Substrat zu ermöglichen, **dadurch gekennzeichnet, dass** das zur-Verfügung-Stellen jedes Produktes aufweist: einen Schritt des Entladens und des Dosierens des in dem Behälter (1) enthaltenen Produktes mittels einer elektrischen Schraubenpumpe (2), einen Schritt des Steuerns, mittels Steuermitteln (12, 13, 14), die an dem Kreis (11) angeordnet sind, zum Steuern einerseits des Entladedurchsatzes und andererseits der Abwesenheit von Luftblasen in dem Produkt oder der Produktmischung, und einen Schritt der Vorbeugung der Ausbildung von Luftblasen durch Vorbeugungsmittel (3, 6, 8, 9, 17) zum Verhindern der Ausbildung von Luftblasen in diesem Produkt oder dieser Produktmischung vor dem Ablagern des Produktes oder der Produktmischung, wobei die Vorbeugungsmittel (3, 6, 8, 9, 17) eine Platte (3) aufweisen, auf der die Pumpe (2) aufliegt, wobei die Platte an ihrem Rand mit einem Dichtungsmittel (6), zum Beispiel einer Dichtung (6) versehen ist, und mindestens eine Einspritzleitung (8, 9) aufweisen, die an einem Verbindungspunkt (5a, 5b) mit der Platte (3) verbunden ist, wobei die Platte (3) in der Lage ist, entlang der Innenwand des Behälters (1) zu gleiten, und fest mit einem Ende der elektrischen Schraube (2) verbunden ist, um das Ausgeben des in dem Behälter (1) enthaltenen Produktes an den Kreis (11) zu ermöglichen, wenn die elektrische Schraube (2) zum Drehen gebracht wird, wobei die Dichtung (6) in der Lage ist, die Dichtigkeit durch Kontakt mit der Innenwand des Behälters (1) zwischen dem Teil des Volumens des Behälters (1), der auf einer Seite (4) der Platte (3) angeordnet ist, und dem Teil dieses Volumens, der auf der anderen Seite der Platte (3) angeordnet ist, sicherzustellen, wobei die Einspritzleitung (8, 9) das Einspritzen eines Gases unter Druck in das Volumen (4) ermöglicht, das auf der Seite der Platte (3) angeordnet ist, die dem Kreis (11) entgegengesetzt ist, das als unterPlatte-Volumen (4) bezeichnet wird, oder das Vakuumieren dieses Volumens (4) ermöglicht, wobei der Schritt der Vorbeugung der Ausbildung der Luftblasen einen Schritt des Einspritzens eines Gases in das unter-Platte-Volumen (4) durch den Verbindungspunkt (5a, 5b) hindurch mit einem Druck, der größer als derjenige ist, der durch die Platte (3) auf das unter-Platte-Volumen (4) ausgeübt wird, ermöglicht, um diese anzuheben, um das Anheben der Platte (3) bei einem Wechseln eines Behälters (1) zu erleichtern.

8. Verfahren gemäß Anspruch 7, **dadurch gekennzeichnet, dass** der Schritt des Steuerns das Messen der Dichte des Produktes oder der Produktmischung aufweist.

9. Verfahren gemäß irgendeinem der Ansprüche 7 und 8, **dadurch gekennzeichnet, dass** der Schritt des Steuerns das Messen des Durchsatzes des Produktes oder der Produktmischung aufweist.

10. Verfahren gemäß den Ansprüchen 8 und 9, **dadurch gekennzeichnet, dass** das Messen des Durchsatzes und das Messen der Dichte des Produktes oder der Produktmischung mittels Messmitteln erfolgen, die sich voneinander unterscheiden oder kombiniert (13) sind.

11. Verfahren gemäß irgendeinem der Ansprüche 7 bis 10, wobei die Vorbeugungsmittel (3, 6, 8, 9, 17) einen Drucksensor aufweisen, der an der Einspritzleitung (8, 9) oder an einem bestimmten Verbindungspunkt (10) in der Platte (3) angeordnet ist, **dadurch gekennzeichnet, dass** der Schritt der Vorbeugung der Ausbildung der Luftblasen beim Absenken der Platte (3) in dem Behälter (1) aufweist: ein Steuern des Drucks in dem unter-Platte-Volumen (4) an dem bestimmten Verbindungspunkt (10) oder an der Einspritzleitung (8, 9) und das Vakuumieren des unter-Platte-Volumens (4), wenn der Druck in diesem unter-Platte-Volumen (4) größer als der atmosphärische Druck wird, so dass das Leerlaufen der elektrischen Schraubenpumpe (2) bei einem Wechseln eines Behälters (1) verhindert wird, welches derart wäre, dass es das Eindringen von Luft bewirken würde.

## Claims

1. A device for preparing and for continuously controlling a viscous product, or a viscous mixture comprising at least two products, such as a resin and a catalyst, designed to allow the formation of a cord made up of said viscous product or mixture and to allow said cord to be deposited onto a substrate, said device comprising, for each product, a distinct container (1), such as a drum (1), and depositing means (15, 16) designed to allow said cord to be deposited onto said substrate and connected to each container (1) via a circuit (11), **characterised in that** it comprises, for each product, a single electric screw pump (2) for filling and dosing said product contained in said container (1), control means (12, 13, 14) disposed on the circuit (11) and designed to control the filling rate, on the one hand, and the absence of air bubbles in the product or mixture of products, on the other hand, and means (3, 6, 8, 9, 17) for preventing the formation of air bubbles, which means being designed to prevent, before the product or mixture of products is deposited, the formation of air bubbles inside said product or mixture of products, said prevention means (3, 6, 8, 9, 17) comprising a plate (3), on which said pump (2) is supported, said plate being provided on its periphery with a sealing means (6), such as a seal (6), and comprising at least one injection line (8, 9) connected via a connection point (5a, 5b) to said plate (3), said plate (3) being designed to slide along the internal wall of said container (1) and being integral with one end of said electric screw (2), so as to allow said product contained in said container (1) to exit towards said circuit (11) when said electric screw (2) is set into rotation, said seal (6) being designed to provide the seal through contact with said internal wall of said container (1) between the section of the volume of said container (1) that is located on one side (4) of said plate (3) and the section of said volume that is located on the other side of said plate (3), said injection line (8, 9) allowing a pressurised gas to be injected into the volume (4), called under-plate volume (4), that is located on the side of said plate (3) that is opposite said circuit (11) or allowing the pumping-down of said volume (4), so as to avoid any waste or air ingress when changing a container.

2. The device according to claim 1, **characterised in that** said control means (12, 13, 14) comprise means (13) for measuring the density of the product or mixture of products.

3. The device according to any one of claims 1 and 2, **characterised in that** said control means (12, 13, 14) comprise means (13) for measuring the flow rate of the product or mixture of products.

4. The device according to claims 2 and 3, **characterised in that** said means for measuring the flow rate and said means for measuring the density of the product or mixture of products are distinct from each other or are combined (13).

5. The device according to any one of claims 1 to 4, **characterised in that** said prevention means (3, 6, 8, 9, 17) comprise a pressure sensor disposed on the injection line (8, 9) or on a specific connection point (10) in said plate (3), allowing the pressure to be measured inside said under-plate volume (4), so as to avoid the unpriming of said electric screw pump (2) when changing a container (1), which could cause air ingress.

6. The device according to any one of claims 1 to 5, **characterised in that** said prevention means (3, 6, 8, 9, 17) comprise a cylinder (17) designed to cause the displacement of said plate (3) inside said container (1) and to keep said under-plate volume (4) pressurised in order to avoid any air ingress.

7. A method for preparing and for continuously controlling a viscous product, or a viscous mixture comprising at least two products, such as a resin and a catalyst, so as to form a cord made up of said viscous product or mixture and to deposit said cord onto a substrate, comprising feeding, by means of a supply circuit (11), each product contained in a distinct container (1), such as a drum (1), into depositing means (15, 16) designed to allow said cord to be deposited onto said substrate, **characterised in that** the feeding of each product comprises a step of filling and dosing the product contained in said container (1), by means of an electric screw pump (2), a control step, using control means (12, 13, 14) disposed on the circuit (11), for controlling the filling rate, on the one hand, and the absence of air bubbles in the product or mixture of products, on the other hand, and a step of preventing the formation of air bubbles, using prevention means (3, 6, 8, 9, 17), so as to prevent, before the product or mixture of products is deposited, the formation of air bubbles inside said product or mixture of products, said prevention means (3, 6, 8, 9, 17) comprising a plate (3), on which said pump (2) is supported, said plate being provided on its periphery with a sealing means (6), such as a seal (6), and comprising at least one injection line (8, 9) connected via a connection point (5a, 5b) to said plate (3), said plate (3) being designed to slide along the internal wall of said container (1) and being integral with one end of said electric screw (2), so as to allow said product contained in said container (1) to exit towards said circuit (11) when said electric screw (2) is set into rotation, said seal (6) being designed to provide the seal through contact with said internal wall of said container (1) between the section of the volume of said container (1) that is located on one side (4) of said plate (3) and the section of said volume that is located on the other side of said plate (3), said injection line (8, 9) allowing a pressurised gas to be injected into the volume (4), called under-plate volume (4), that is located on the side of said plate (3) that is opposite said circuit (11) or allowing the pumping-down of said volume (4), said step of preventing the formation of air bubbles comprising a step of injecting a gas into said under-plate volume (4) through said connection point (5a, 5b) at a pressure that is higher than that which is exerted by said plate (3) on said under-plate volume (4), so as to lift said volume, in order to facilitate the raising of said plate (3) when changing a container (1).

8. The method according to claim 7, **characterised in that** said control step comprises measuring the density of the product or mixture of products.

9. The method according to any one of claims 7 and 8, **characterised in that** said control step comprises measuring the flow rate of the product or mixture of products.

10. The method according to claims 8 and 9, **characterised in that** measuring the flow rate and measuring the density of the product or mixture of products are carried out by measurement means that are distinct from each other or are combined (13).

11. The method according to any one of claims 7 to 10, said prevention means (3, 6, 8, 9, 17) comprising a pressure sensor disposed on the injection line (8, 9) or on a specific connection point (10) inside said plate (3), **characterised in that** said step of preventing the formation of air bubbles comprises, when said plate (3) is lowered into said container (1), a control of the pressure inside said under-plate volume (4) at said specific connection point (10) or on said injection line (8, 9), and the pumping-down of said under-plate volume (4) when the pressure inside said under-plate volume (4) becomes higher than the atmospheric pressure, so as to avoid the unpriming of said electric screw pump (2) when changing a container (1), which could cause air ingress.
